# EUROPÄISCHE PATENTSCHRIFT

(11) **EP 3 350 490 B1**
(45) Veröffentlichungstag und Bekanntmachung des Hinweises auf die Patenterteilung: **23.09.2020**
(21) Anmeldenummer: 16760055.0
(22) Anmeldetag: 31.08.2016
(51) Int. Cl.: F16K 3/02, F16K 3/20, F16K 3/30, F16K 3/316

(54) **PLATTENSCHIEBER, VORZUGSWEISE ZUM ABSPERREN EINER MEDIEN FÜHRENDEN LEITUNG**
SLIDE VALVE, PREFERABLY FOR CLOSING OFF A MEDIA CONVEYING LINE
VANNE GUILLOTINE, DE PRÉFÉRENCE POUR OBTURER UNE CONDUITE D'ÉCOULEMENT DE MILIEUX

(30) Priorität: 16.09.2015 CH 13612015
(43) Veröffentlichungstag der Anmeldung: 25.07.2018
(73) Patentinhaber: Sistag AG, 6274 Eschenbach (CH)
(72) Erfinder: SIDLER, Hans-Joerg, 6274 Eschenbach (CH)
(74) Vertreter: Luchs, Willi
(86) Internationale Anmeldenummer: PCT/EP2016/070509
(87) Internationale Veröffentlichungsnummer: WO 2017/045923

(56) Entgegenhaltungen:
- EP-A2- 1 886 322
- EP-A2- 2 216 572
- WO-A1-2005/098288
- WO-A1-2006/124522
- WO-A1-2012/024195
- WO-A1-2012/100287
- DE-A1- 2 658 809
- DE-B3-102009 011 363
- DE-U1-202007 001 562
- US-A- 2 774 371
- US-A- 4 206 905
- US-A- 5 271 426
- US-A- 5 653 423

## Beschreibung

Die Erfindung betrifft einen Plattenschieber, vorzugsweise zum Absperren einer Medien führenden Leitung nach dem Oberbegriff des Anspruchs 1.

Solche gattungsmässigen Plattenschieber werden unter anderem zum Öffnen bzw. Schliessen von Leitungen zum Fördern von Medien verwendete, wie beispielsweise in Kläranlagen mit Rohabwasser oder Schlamm, in der Chemie mit Granulaten, chemischen Flüssigkeiten etc., in der Lebensmittelindustrie mit Trinkflüssigkeiten, Getreide oder Spülflüssigkeiten oder ähnlichem.

Bei einem solchen Plattenschieber gemäss der Druckschrift EP-A-2 216 572 ist ein zweiteiliges Gehäuse und eine diesem verstellbare Schieberplatte zum Öffnen bzw. Schliessen einer Durchgangsöffnung vorgesehen. Bei diesem Schieber sind in dem Gehäuse oberhalb der Durchgangsöffnung Längsdichtungen enthalten, welche quer zur Verschieberichtung der Schieberplatte ausgerichtet sind und oberseitig eine flexible Dichtung zwischen dem Gehäuse und der Schieberplatte bilden.

Zusätzlich ist für die seitliche bzw. untere Abdichtung zwischen der Schieberplatte und dem Gehäuse eine Dichtschnur oder dergleichen und eine Stirndichtung vorgesehen, welche gemeinsam im Schliesszustand zwischen der Schieberplatte und dem Gehäuse rundum eine Dichtung bilden. Damit ergibt sich bei geschlossenem Schieber eine dauerhafte und sichere Abdichtung. Zwischen den einzelnen Dichtungen können aber bei einem hohen Mediendruck Lecks entstehen.

In der Druckschrift WO-A-2005/098288 bzw. WO-A-2006/124522 ist jeweils ein Plattenschieber mit einer ein- oder mehrteiligen Schieberdichtung geoffenbart, welche eine in die Gehäuseteile einsetzbare Querdichtung und ein die Durchgangsöffnung teilweise umgebendes Profil umfasst. Diese Querdichtung ist mit einer oder mehreren Einspritzkammern versehen, die zur Aufnahme eines einspritzbaren Mediums ausgebildet sind.

Bei einem Plattenschieber gemäss dem Dokument US-A-4,206,905 ist in dessen Schiebergehäuse eine Weichdichtung angeordnet, von welcher der eine Teil ein Profil ist, das in einer den Durchflusskanal U-förmig umgebenden Nut liegt und an einer im Schiebergehäuse beweglich geführten Schieberplatte stirnseitig anliegt. Der andere Teil bildet ein am spindelseitigen Gehäuserand angeordneter Profilring. Das Profil und die Ringdichtung bestehen aus einer einteiligen Weichdichtung.

Gemäss der Druckschrift DE-A-20 2007 001 562 ist eine Plattenschieber-Gehäusedichtung mit einem Dichtscheiben-Durchgangsabschnitt und einem Gehäuse-Umlaufabschnitt gebildet. Der Dichtscheiben-Durchgangsabschnitt umfasst zwei Dichtkonturen, zwischen denen ein abgedichteter Durchgang für eine Plattenschieber-Dichtscheibe ausgebildet ist. Die Dichtkonturen in der Dichtscheiben-Durchgangsrichtung sind dabei zueinander versetzt angeordnet.

Derartige Plattenschieber werden aber auch in Leitungen für die Förderung von Medien mit abrasiven Eigenschaften, wie Ölsand, eingesetzt, bei denen die Leitungen mit Durchflussöffnungen von bis zu 1'000 mm dimensioniert sind und dabei mit hohen Drücken gearbeitet wird. Beispielsweise bei zu förderndem Ölsand beinhaltet dieser sandkorn-, faust- oder bis zu klumpengrosse Mineralmischungen. Da diese Leitungen üblicherweise im freien Aussenbereich verlegt sind, sind sie auch hohen Temperaturdifferenzen ausgesetzt. Damit ergeben sich zusätzliche Anforderungen an den Plattenschieber, damit dieser stets die geforderte Dichtfunktion und dabei eine hohe Lebensdauer erfüllt.

Der vorliegenden Erfindung wurde die Aufgabe zugrundegelegt, einen Plattenschieber derart zu verbessern, dass dieser einfach gefertigt und zusammengebaut werden kann und dabei eine zuverlässige sowie dauerhafte Dichtung gewährleistet.

Erfindungsgemäss ist diese Aufgabe nach den Merkmalen des Anspruchs 1 gelöst.

Der Plattenschieber nach der Erfindung sieht vor, die Dichtungsanordnung einstückig aus einem die Durchgangsöffnung teilweise umgebenden Profil sowie aus den mit diesem verbundenen queren Längsdichtungen auszubilden.

Mit dieser Ausbildung der Dichtungsanordnung wird erreicht, dass der Plattenschieber in kompakter Bauweise gefertigt ist.

Ausserdem sind beim Fördern zum Beispiel von Ölsand wegen der entstehenden Abrasion und dem Festkleben von verdicktem Material hohe Anforderungen an den Schieber gestellt. Mit der erfindungsgemässen einstückigen Dichtungsanordnung aus einem entsprechenden Kunststoff sind auch diesbezüglich beste Voraussetzungen für eine lang anhaltende Lebensdauer geschaffen.

Mit dieser einstückigen Ausbildung der Dichtungsanordnung ergibt sich ein weiterer erheblicher Vorteil dadurch, dass sie als ein Stück als erstes in den einen Gehäuseteil eingesetzt und dann der andere Gehäuseteil entsprechend aufgesteckt werden kann, so dass damit ein einfacher Zusammenbau ermöglicht wird.

Weitere vorteilhafte Einzelheiten des Plattenschiebers im Rahmen der Erfindung sind in den abhängigen Ansprüchen definiert.

Ausführungsbeispiele der Erfindung sind nachfolgend anhand einer Zeichnung näher erläutert. Es zeigt:
- Fig. 1: eine perspektivische Ansicht eines längsgeschnittenen Plattenschiebers nach der Erfindung;
- Fig. 2: einen perspektivischen Querschnitt des Plattenschiebers nach Fig. 1 im oberen Bereich;
- Fig. 3: die erfindungsgemässe Dichtungsanordnung für den Plattenschieber nach Fig. 1 in perspektivischer Ansicht;
- Fig. 4: eine perspektivische Teilansicht der Dichtungsanordnung nach Fig. 3;
- Fig. 5: eine Hälfte einer Variante eines längsgeschnittenen Plattenschiebers nach der Erfindung;
- Fig. 6: einen Querschnitt des Plattenschiebers nach Fig. 5;
- Fig. 7: eine Ansicht einer Variante einer Dichtungsanordnung für den Plattenschieber nach Fig. 5; und
- Fig. 8: einen Querschnitt der Dichtungsanordnung nach Fig. 7.

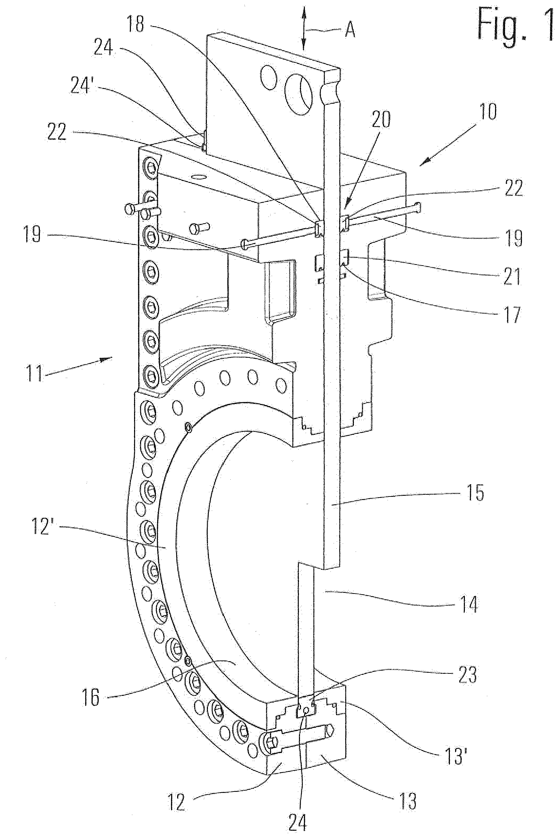

Fig. 1 zeigt einen Plattenschieber 10, der sich im Wesentlichen aus einem Gehäuse 11 mit zwei Gehäuseteilen 12, 13 und einer Schieberplatte 15 zusammensetzt. Eine quere Durchgangsöffnung 14 ist in dem Gehäuse 11 vorgesehen, welche durch die nach unten verstellte Schieberplatte 15 verschlossen ist. An diese Durchgangsöffnung 14 sind nicht näher gezeigte Leitungen angeschlossen, welche vorteilhaft mit einem Innendurchmesser wie derjenige der Bohrung 16 des Gehäuses 11 bemessen sind, damit keine Totzonen durch Absätze bestehen.

Dieser Plattenschieber 10 ist beispielsweise zum Absperren für Ölsand führende Leitungen konzipiert. Er könnte aber selbstverständlich auch als Absperrung bei der Förderung von anderen Medien verwendet werden.

Es ist eine Dichtungsanordnung 20 für ein komplettes Abdichten des Plattenschiebers nach aussen und zwischen der Schieberplatte 15 und dem Gehäuse 11 in dem geschlossenen Zustand vorgesehen. Dazu sind oberhalb der Durchgangsöffnung 14 beidseitig zur Schieberplatte 15 je zwei quere untere Längsdichtungen 21 bzw. obere Längsdichtungen 22 sowie eine auf die Aussenseite der Schieberplatte sowohl seitlich als auch bei der unteren Rundung wirkende Dichtung in den Gehäuseteilen 12, 13 enthalten.

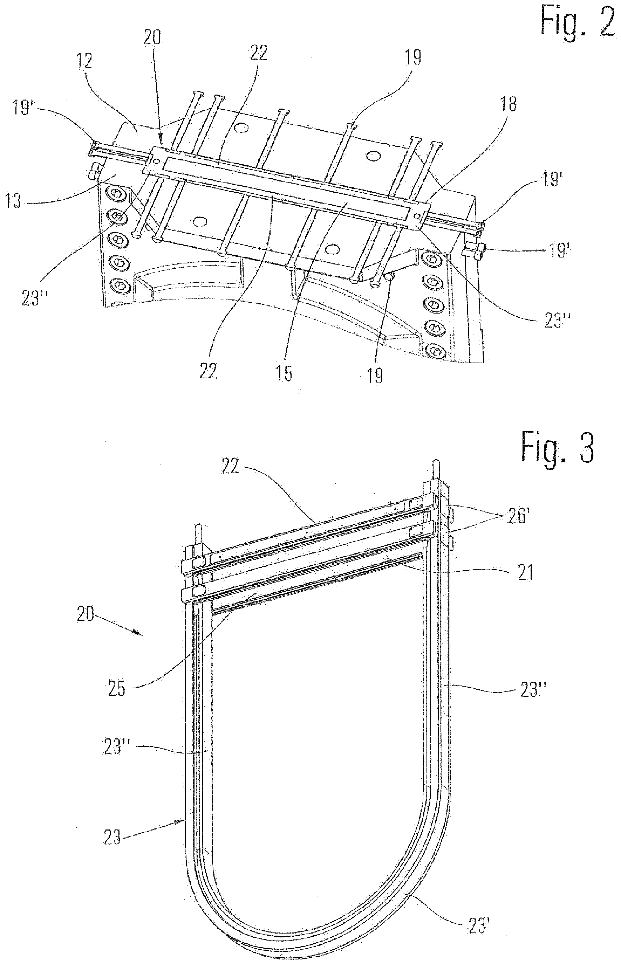

Wie insbesondere aus Fig. 3 ersichtlich, ist die Dichtungsanordnung 20 erfindungsgemäss einstückig aus einem die Durchgangsöffnung 14 teilweise umgebenden Profil 23 sowie aus den mit diesem verbundenen queren Längsdichtungen 21, 22 gebildet.

Diese einstückige Dichtungsanordnung 20 ist vorteilhaft aus einem Kunststoff hergestellt, für den vorzugsweise Polyurethan verwendet wird, welcher sehr verschleissfest ist. Sie kann dabei gegossen, durch einen 3D-Drucker und/oder auch aus einem Stück durch spanabhebende Bearbeitung erzeugt sein. Theoretisch könnte beispielsweise das Profil mit den Längsdichtungen durch Aufschweissen, Vulkanisieren oder dergleichen zu dieser einstückigen Dichtungsanordnung verbunden sein.

Dieses U-förmig gebildete Profil 23 besteht aus einem bogenförmigen Teil 23' und von diesem ausgehende Schenkeln 23". Bei den Enden dieser Schenkel 23" sind beidseitig je zwei beabstandet zueinander verlaufende Längsdichtungen 21, 22 mit dem Profil 23 verbunden, wobei diese Längsdichtungen jeweils an der Seitenfläche des Profils angrenzen.

In seinem bogenförmigen Teil 23' ist das Profil 23 mit einer der Durchgangsöffnung 14 entsprechenden Rundung versehen und derart im Gehäuse 11 montiert, dass es mit seiner Innenseite bei dieser Rundung annähernd bündig zu dieser die Durchgangsöffnung 14 bildenden Bohrung 16 des Gehäuses verläuft.

Es sind in diesen Gehäuseteilen 12, 13 ferner Ringkörper 12', 13' mit der Bohrung 16 eingesetzt, die das abgestufte Profil 23 mit Vorteil hintergreifen, um letzteres zu halten.

Diese beabstandet zueinander verlaufenden Längsdichtungen 21, 22 sind jeweils in einer sich quer zur Verstellrichtung A der Schieberplatte 15 erstreckenden Längsnut 17, 18 im jeweiligen Gehäuseteil 12, 13 einführbar und darin in Querrichtung verstellbar gelagert.

Gemäss Fig. 2 sind überdies Verstellmittel 19, 19' in den Gehäuseteilen 12, 13 auf der Höhe dieser Längsnuten 17, 18 bei der Dichtungsanordnung 20 vorhanden, bei denen es sich beispielsweise um Schrauben handelt, die von ausserhalb der Gehäuseteile 12, 13 durch entsprechende Schraubenzieher drehbar sind.

Mit diesen Verstellmitteln 19 im mittleren wie auch im Endbereich der oberen Längsdichtungen 22 bzw. im Endbereich der unteren Längsdichtungen 21 sowie mit den quer auf die Schenkel 23" des Profils drückenden Verstellmitteln 19' wird bezweckt, dass die Längsdichtungen 21, 22 bzw. diese Schenkel 23" gegen die Schieberplatte 15 andrückbar sind, um die Dichtigkeit in diesem Bereich des Schiebers 10 sicherzustellen, wobei dies erst nach einer gewissen Betriebszeit erforderlich ist, wenn allenfalls Undichtigkeiten auftreten.

Entsprechend sind in den Längsdichtungen 21, 22 bzw. den Schenkeln 23" jeweils mit den Verstellmitteln 19, 19' korrespondierende Verstärkungsplatten bzw. Verstärkungsleisten 26, 26' integriert, weiche vorteilhaft aus einem Metallblech gefertigt sind und die Nachstellkräfte auf die Längsdichtungen aufnehmen bzw. verteilen.

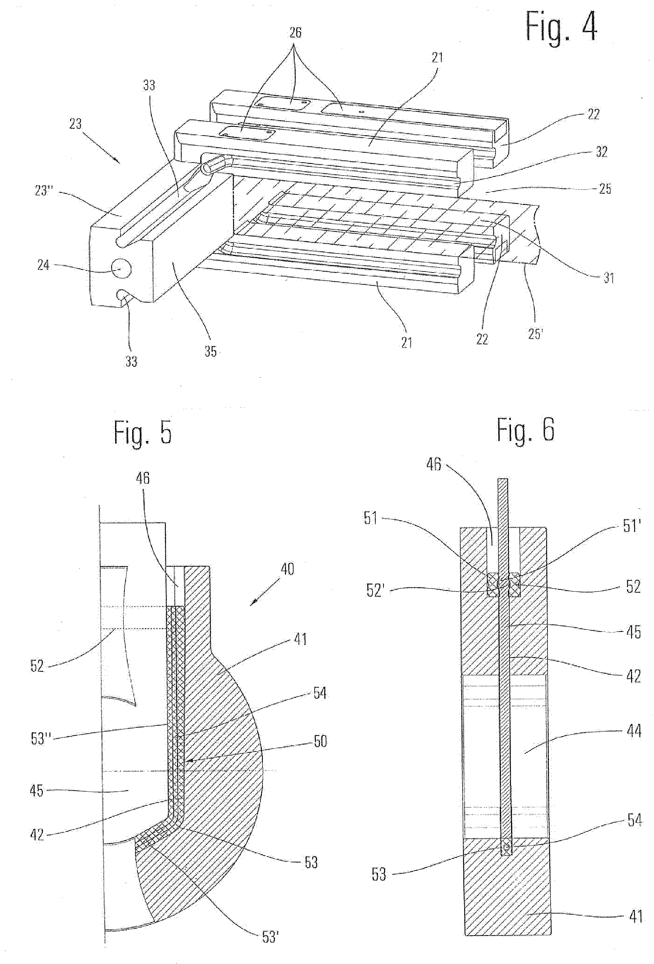

Gemäss Fig. 4 bilden die Längsdichtungen 21, 22 zusammen mit den Schenkeln 23" des Profils 23 einen Hohlraum 25 mit einem rechteckigen Querschnitt 25', der strichpunktiert angedeutet ist. Dieser Querschnitt 25' entspricht dabei annähernd dem Schieberplattenquerschnitt, so dass die Schieberplatte 15 darin annähernd spielfrei und somit dicht geführt ist. Vorteilhaft ist bei den gegen die Durchgangsöffnung 14 hin angeordneten unteren Längsdichtungen 21 dieser Querschnitt 25' etwas kleiner als der Schieberplattenquerschnitt, so dass beim Einschieben der Platte 15 eine von diesen Längsdichtungen erzeugte Vorspannung bewirkt wird, um die Dichtwirkung zu optimieren.

Die Längsdichtungen 21, 22 bzw. das Profil 23 sind im Querschnitt rückseitig rechteckförmig, beidseitig mit je einer Ausnehmung 32, 33 und innenseitig mit einer mit der Aussenseite der Schieberplatte 15 zusammenwirkenden ebenen Auflagefläche 31, 35 versehen, wobei diese innenseitige Auflagefläche 35 beim Profil 23 eine Breite aufweist, die annähernd der Dicke der Schieberplatte 15 entspricht.

Im Profil 23 ist ein sich vorzugsweise über die gesamte Länge integriertes Verstärkungselement 24 eingebettet. Es verläuft dabei bei den Schenkeln 23" annähernd im Zentrum, währenddem es im bogenförmigen Teil 23' im äusseren Bereich des Profils angeordnet ist, wie dies in Fig. 1 ersichtlich ist. Damit ist das Profil in diesem Teil innenseitig für eine bessere Dichtung für die Unterseite der Platte 15 nachgiebiger.

Zweckmässigerweise ragt dieses Verstärkungselement 24 mit beiden Enden aus dem Profil 23 und dem Gehäuse 11 heraus und es ist durch Schrauben 24' oder dergleichen gegen das Gehäuse verspannt, wie in Fig. 1 angedeutet ist. Mit dieser Massnahme wird auf diese Dichtungsanordnung 20 eine höhere Stabilität im Gehäuse erzeugt. Dabei kann für dieses Verstärkungselement 24 eine Gewindestange verwendet werden.

Fig. 5 und Fig. 6 zeigen einen Plattenschieber 40 mit einem einteilig ausgebildeten Gehäuse 41 und einer queren Durchgangsöffnung 44, an diese Leitungen angeschlossen sind. Es ist ein Längsschlitz 42 in dem Gehäuse 41 derart ausgebildet, dass eine Schieberplatte 45 annähernd spielfrei darin verstellbar und an ihrem Aussenumfang eine U-förmige Dichtungsanordnung 50 angeordnet ist. Im geschlossenen Zustand des Plattenschiebers 40 wird mit dieser Dichtungsanordnung 50 eine beidseitige und unterseitige Abdichtung zwischen der Schieberplatte 45 und dem Gehäuse 41 bewerkstelligt.

Die Dichtungsanordnung 50 ist erfindungsgemäss einstückig aus einem die Durchgangsöffnung 44 teilweise umgebenden Profil 53 sowie aus den mit letzterem verbundenen queren Längsdichtungen 51, 52 gebildet.

Dieses U-förmige Profil 53 erstreckt sich annähernd bis ans obere Ende des Gehäuses 41 und ist dort mit den beidseitig zu diesem angeordneten Längsdichtungen 51, 52 verbunden, so dass die Durchgangsöffnung 44 rundum abgedichtet ist. Dieses Profil 53 setzt sich aus einem rinnenförmigen unteren Teil 53', der zu dieser bei der Durchgangsöffnung 44 ausgebildeten Rundung bündig verläuft, und von diesem Teil 53' beidseitig ausgehende Schenkeln 53" zusammen.

Sowohl die Schieberplatte 45 als auch die erfindungsgemässe einstückige Dichtungsanordnung 50 sind von oben in das Gehäuse 45 einschiebbar, womit sich eine einfache Montage des Plattenschiebers 40 ergibt. Vorteilhaft ist ein nicht näher gezeigter Deckel auf dem Gehäuse 41 befestigbar.

Auf der Oberseite des Gehäuses 41 ist überdies eine Ausnehmung 46 ausgebildet, welche derart dimensioniert ist, dass die Längsdichtungen 51, 52 annähernd spielfrei darin einlegbar sind. Die Längsdichtungen 51, 52 weisen an ihrer die Schieberplatte 45 berührenden Innenflächen 51', 52' vorzugsweise eine in Schieberichtung gesehen gewellte Oberfläche auf, damit lippenartige Auflagen gebildet sind, die sich über gesamte Breite entlang der schliessenden Plattenoberflächen erstrecken und eine optimale Dichtung bilden.

Diese Längsdichtungen 51, 52 und die Schenkel 53" des Profils 53 sind im montierten Zustand innenseitig bei den Kontaktflächen mit der Schieberplatte 45 so bemessen, dass zwischen der Schieberplatte 45 in der Schliessstellung und der Dichtungsanordnung ein Anpressdruck besteht, um eine ausreichende Dichtung zu erlangen.

Im Profil 53 ist ausserdem ein vorzugsweise aus einem Metall bestehendes Verstärkungselement 54 eingebettet, welches im Querschnitt rechteckförmig ausgebildet ist.

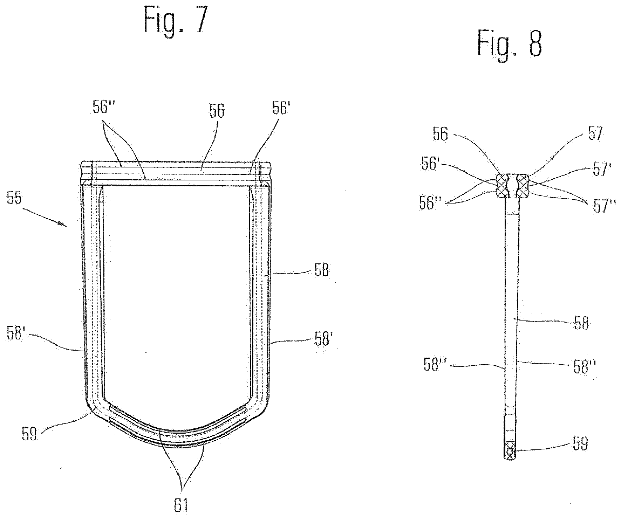

Fig. 7 und Fig. 8 zeigen eine Variante einer erfindungsgemässen Dichtungsanordnung 55, welche sich für den Einbau in einen Plattenschieber 40 gemäss Fig. 5 eignet und daher nachfolgend nurmehr die Unterschiede gegenüber derjenigen nach Fig. 5 erläutert sind.

Die beiden Längsdichtungen 56, 57 am oberen Ende des Profils 58 der Dichtungsanordnung 55 sind im Querschnitt sowohl aussen- als auch innenseitig mit in Schieberichtung gesehen gewellten Oberflächen versehen, so dass je zwei längliche Lippenauflagen 56", 57" und je eine mittige Längsnut 56' , 57' gebildet sind.

Zudem sind die beiden Schenkel des Profils 58 an ihren Aussenseiten 58', die abkehrt zueinander liegen, und/oder an ihren Seitenflächen 58" in Verschliessrichtung verjüngend bzw. konisch ausgebildet. Damit lässt sich diese Dichtungsanordnung 55 leicht in das Gehäuse einsetzen und wenn sie verschlissen ist, kann sie auch wieder einfach herausgenommen werden. Vorteilhaft sind die korrespondierenden Flächen des entsprechenden Längsschlitzes 42 im Gehäuse 41 ebenfalls mit der gleichen Konizität wie die Aussenseiten 58' bzw. die Seitenflächen 58" der Dichtungsanordnung 55 ausgebildet.

Ferner ist ebenso ein im Profil 58 eingebettetes Verstärkungselement 59 enthalten, welches sich unten und beidseitig annähernd bis an das obere Profilende erstreckt; und zudem sind dem rinnenförmigen unteren Teil des Profils 58 annähernd über seine gesamte Länge verlaufende, seitlich nach aussen vorstehende Längsrippen 61 zugeordnet, durch die ein besserer Halt des Profils in dem Längsschlitz 42 im Gehäuse 41 bezweckt wird.

Die Erfindung ist mit den oben erläuterten Ausführungsbeispielen ausreichend dargetan. Sie liesse sich jedoch noch in anderen Varianten darstellen. So könnte im Prinzip anstelle von zwei Längsdichtungen pro Seite auch nur eine vorgesehen sein. Es könnte auch kein Verstärkungselement oder mehrere solcher im Profil eingebettet sein.

Im Prinzip könnte dieses Profil bei dem bogenförmigen Teil 23' statt kreisrund auch mit einem nur leicht gerundeten oder einer annähernd geradlinigen untere Seite ausgebildet sein, dies je nach Typ des Schiebers.

Die Längsdichtungen könnten selbstverständlich auch statt eine längliche eine bogenförmige Ausbildung oder dergleichen aufweisen.

## Patentansprüche

1. Plattenschieber, vorzugsweise zum Absperren einer Medien führenden Leitung, mit einem Gehäuse (11, 41) mit einem Längsschlitz (42) und einer Durchgangsöffnung (14, 44), einer darin verstellbaren Schieberplatte (15, 45) sowie einer Dichtungsanordnung (20, 50, 55), die einstückig aus oberhalb der Durchgangsöffnung (14) beidseitig zur Schieberplatte (15, 45) je wenigstens einer queren Längsdichtung (21, 22, 51, 52, 56, 57) und einem die Durchgangsöffnung (14, 44) teilweise umgebenden Profil (23, 53, 58) mit Schenkeln (23", 53", 58') gebildet ist, **dadurch gekennzeichnet, dass**
beidseitig bei den Enden der Schenkel (23", 53", 58') des Profils (23, 53, 58) je zwei parallel beabstandet zueinander verlaufende Längsdichtungen (21, 22) jeweils an der Seitenfläche des Profils (58) mit diesem verbunden sind, oder dass bei der Dichtungsanordnung (55) mit beidseitig je einer queren Längsdichtung (56, 57) die beiden Schenkel (58') des Profils (58) an ihren Aussenseiten (58'), die abgekehrt zueinander liegen, und an ihren Seitenflächen (58") in Verschliessrichtung verjüngend bzw. konisch und die korrespondierenden Flächen des entsprechenden Längsschlitzes (42) im Gehäuse (41) ebenfalls mit der gleichen Konizität wie diese Aussenseiten (58') bzw. Seitenflächen (58") ausgebildet sind.

2. Plattenschieber nach Anspruch 1, **dadurch gekennzeichnet, dass** die beabstandet zueinander verlaufenden Längsdichtungen (21, 22) in jeweils einer sich quer zur Verstellrichtung der Schieberplatte (15) erstreckenden Längsnut (17, 18) im jeweiligen Gehäuseteil (12, 13) eines zweiteiligen Gehäuses (11) einführbar sind.

3. Plattenschieber nach Anspruch 1 oder 2, **dadurch gekennzeichnet, dass**
das Profil (23) in seinem bogenförmigen Teil (23') mit einer der Durchgangsöffnung (14) entsprechenden Rundung versehen und derart im Gehäuse (11) montiert ist, dass es mit seiner Innenseite bei dieser Rundung annähernd bündig zu dieser die Durchgangsöffnung (14) bildenden Bohrung (16) des Gehäuses verläuft.

4. Plattenschieber nach einem der vorhergehenden Ansprüche 1 bis 3, **dadurch gekennzeichnet, dass**
die Längsdichtungen (21, 22, 51, 52, 56, 57) zusammen mit den Schenkeln (23", 53", 58') des Profils (23, 53, 58) einen Hohlraum (25) mit einem rechteckigen Querschnitt (25') bilden, welcher annähernd dem Schieberplattenquerschnitt entspricht, so dass die Schieberplatte (15) darin annähernd spielfrei geführt ist, oder eine bestimmte Vorspannung zwischen diesen erzeugt wird.

5. Plattenschieber nach Anspruch 4, **dadurch gekennzeichnet, dass** die in der Längsnut (17, 18) im jeweiligen Gehäuseteil (12, 13) befindlichen Längsdichtungen (21, 22) und/oder die Schenkel (23") des Profils (23) durch von ausserhalb des Gehäuses (11) betätigbaren Verstellmitteln (19, 19') gegen die Schieberplatte (15) andrückbar sind.

6. Plattenschieber nach einem der vorhergehenden Ansprüche 1 bis 5, **dadurch gekennzeichnet, dass**
die Längsdichtungen (21, 22) bzw. das U-förmig gebildete Profil (23) im Querschnitt rückseitig rechteckförmig, beidseitig mit je einer Ausnehmung (32, 33) und innenseitig mit einer mit der Aussenseite der Schieberplatte (15) zusammenwirkenden ebenen Auflagefläche (31, 35) versehen sind.

7. Plattenschieber nach einem der vorhergehenden Ansprüche 1 bis 6, **dadurch gekennzeichnet, dass**
das Profil (23) innenseitig eine Breite aufweist, die annähernd der Dicke der Schieberplatte (15) entspricht.

8. Plattenschieber nach Anspruch 1 oder 2, **dadurch gekennzeichnet, dass**
das Gehäuse (41) im Wesentlichen einteilig ausgebildet ist und die Dichtungsanordnung (50) sowie die Schieberplatte (45) in einen entsprechenden Längsschlitz (42) darin fixierbar bzw. einschiebbar sind.

9. Dichtungsanordnung für einen Plattenschieber nach einem der vorhergehenden Ansprüche 1 bis 8, die einstückig aus je wenigstens einer queren Längsdichtung (21, 22, 51, 52, 56, 57) und einem Profil (23, 53, 58) mit Schenkeln (23", 53", 58') gebildet ist, **dadurch gekennzeichnet, dass**
beidseitig bei den Enden der Schenkel (23", 53", 58') des Profils (23, 53, 58) je zwei parallel beabstandet zueinander verlaufende Längsdichtungen (21, 22) jeweils an der Seitenfläche des Profils (58) mit diesem verbunden sind, oder dass bei der Dichtungsanordnung (55) mit beidseitig je einer queren Längsdichtung (56, 57) die beiden Schenkel (58') des Profils (58) an ihren Aussenseiten (58'), die abgekehrt zueinander liegen, und an ihren Seitenflächen (58") verjüngend bzw. konisch ausgebildet sind.

10. Dichtungsanordnung nach Anspruch 9, **dadurch gekennzeichnet, dass**
sie aus einem Kunststoff, vorzugsweise Polyurethan, hergestellt ist.

11. Dichtungsanordnung nach Anspruch 9 oder 10, **dadurch gekennzeichnet, dass**
im Profil (23, 53, 58) mindestens ein sich vorzugsweise über die gesamte Länge integriertes Verstärkungselement (24, 54, 59) eingebettet ist.

12. Dichtungsanordnung nach Anspruch 11, **dadurch gekennzeichnet, dass** dieses Verstärkungselement (24) bei den Schenkeln (23") im Profil (23) annähernd im Zentrum, währenddem es im bogenförmigen Teil (23') im äusseren Bereich des Profils (23) verläuft.

13. Dichtungsanordnung nach einem der vorhergehenden Ansprüche 9 bis 12, **dadurch gekennzeichnet, dass**
in den Längsdichtungen (21, 22) und/oder in den Schenkeln (23") des Profils (23) jeweils aussenseitig Verstärkungsplatten (26, 26') integriert sind.

## Claims

1. Slide valve, preferably for closing off a media-conveying line, comprising a housing (11, 41) with a longitudinal slot (42) and a through-opening (14, 44), a slide plate (15, 45) that can be moved therein and a sealing arrangement (20, 50, 55), which is formed as a single piece from in each case at least a transverse longitudinal seal (21, 22, 51, 52, 56, 57) above the through-opening (14) on both sides of the slide plate (15, 45) and from a profile (23, 53, 58) with legs (23", 53", 58') partially surrounds the through-opening (14, 44), **characterised in that**
at the ends of the legs (23", 53", 58') of the profile (23, 53, 58) on both sides, in each case two longitudinal seals (21, 22), running parallel to and spaced apart from one another, are each connected to the profile (58) on the lateral face of the latter, or that with the sealing arrangement (55) with on both sides each a transverse longitudinal seal (56, 57) the both legs (58') of the profile (58) on their outsides (58'), which are turned away from one another, and on their lateral faces (58") in closing direction are formed tapered or conically and the corresponding surfaces of the respective longitudinal slot (42) are likewise formed in the housing (41) with the same conicity as the outsides (58') respectively the lateral faces (58").

2. Slide valve according to Claim 1, **characterised in that**
the longitudinal seals (21, 22) that run spaced apart from one another in a respective longitudinal groove (17, 18) extending transversely to the direction of moving the slide plate (15) can be introduced into the respective housing part (12, 13) of a two-part housing (11).

3. Slide valve according to Claim 1 or 2, **characterised in that**
in its arched part (23') the profile (23) is provided with a rounding corresponding to the through-opening (14) and is fitted in the housing (11) such that, with its inside, at this rounding it runs almost flush with this bore hole (16) of the housing that forms the through-opening (14).

4. Slide valve according to any of the preceding Claims 1 to 3, **characterised in that**
the longitudinal seals (21, 22, 51, 52, 56, 57) together with the legs (23", 53", 58') of the profile (23, 53, 58), form a cavity (25) with a rectangular cross-section (25'), which approximately corresponds to the cross-section of the slide plate so that the slide plate (15) is guided therein almost without play, or a specific pre-stressing is generated between the latter.

5. Slide valve according to Claim 4, **characterised in that**
the longitudinal seals (21, 22) located in the respective housing part (12, 13) in the longitudinal groove (17, 18) and/or the legs (23") of the profile (23) can be pressed against the slide plate (15) by adjusting means (19, 19') that can be actuated from outside the housing (11).

6. Slide valve according to any of the preceding Claims 1 to 5, **characterised in that**
the longitudinal seals (21, 22) or the profile (23) formed in a U shape and with a rectangular cross-section at the rear are provided on both sides with a recess (32, 33) and on the inside with a level bearing surface (31, 35) interacting with the outside of the slide plate (15).

7. Slide valve according to any of the preceding Claims 1 to 6, **characterised in that**
the profile (23) has a width on the inside which corresponds approximately to the thickness of the slide plate (15).

8. Slide valve according to Claim 1 or 2, **characterised in that**
the housing (41) is substantially formed as a single piece and the sealing arrangement (50) and the slide plate (45) can be fixed or be inserted into a corresponding longitudinal slot (42).

9. Sealing arrangement for a slide valve according to any of the preceding Claims 1 to 8, it is formed as a single piece from in each case at least a transverse longitudinal seal (21, 22, 51, 52, 56, 57) and a profile (23, 53, 58) with legs (23", 53", 58'), **characterised in that**
at the ends of the legs (23", 53", 58') of the profile (23, 53, 58) on both sides, in each case two longitudinal seals (21, 22), running parallel to and spaced apart from one another, are each connected to the profile (58) on the lateral face of the latter, or that with the sealing arrangement (55) with on both sides each a transverse longitudinal seal (56, 57) the both legs (58') of the profile (58) on their outsides (58'), which are turned away from one another, and on their lateral faces (58") in closing direction are formed tapered or conically.

10. Sealing arrangement according to Claim 9, **characterised in that**
it is produced from a plastic, preferably polyurethane.

11. Sealing arrangement according to Claim 9 or 10, **characterised in that**
at least one reinforcement element (24, 54, 59), preferably integrated over the entire length, is embedded in the profile (23, 53, 58).

12. Sealing arrangement according to Claim 11, **characterised in that**
this reinforcement element (24) runs approximately in the centre of the profile (23) on the legs (23"), while in the arched part (23') it runs in the outer region of the profile (23).

13. Sealing arrangement according to any of the preceding Claims 9 to 12, **characterised in that**
reinforcement plates (26, 26') are respectively integrated on the outside in the longitudinal seals (21, 22) and/or in the legs (23") of the profile (23).

## Revendications

1. Vanne guillotine, de préférence pour obturer une conduite d'écoulement de milieux, avec un boîtier (11, 41) avec une fente allongée (42) et une ouverture de passage (14, 44), une plaque coulissante (15, 45) déplaçable à l'intérieur du boîtier ainsi qu'un dispositif d'étanchéité (20, 50, 55) qui est formé d'une seule pièce, au-dessus de l'ouverture de passage (14) de chaque côté de la plaque coulissante (15, 45), d'au moins un joint allongé (21, 22, 51, 52, 56, 57) transversal et d'un profilé (23, 53, 58) avec des ailes (23", 53", 58') entourant en partie l'ouverture de passage (14, 44), **caractérisée en ce que**
de chaque côté aux extrémités des ailes (23", 53", 58') du profilé (23, 53, 58) deux joints allongés (21, 22) disposés parallèlement à distance l'un de l'autre sont reliés chacun au niveau de la surface latérale du profilé (58) à celui-ci, ou **en ce que**, pour le dispositif d'étanchéité (55) avec de chaque côté un joint allongé (56, 57) transversal, les deux ailes (58') du profilé (58) au niveau des côtés externes (58'), qui sont tournés à l'opposé l'un de l'autre, et au niveau de leurs surfaces latérales (58") sont formées en se rétrécissant ou en étant coniques en direction de la fermeture, et les surfaces correspondantes de la fente allongée (42) associée sont formées dans le boîtier (41) également avec la même conicité que ces côtés externes (58') ou ces surfaces latérales (58").

2. Vanne guillotine selon la revendication 1, **caractérisée en ce que** les joints allongés (21, 22) disposés à distance l'un de l'autre peuvent être introduits chacun dans une nervure allongée (17, 13) s'étendant transversalement à la direction de déplacement de la plaque coulissante (15) dans la partie de boîtier (12, 13) respective d'un boîtier (11) en deux parties.

3. Vanne guillotine selon la revendication 1 ou 2, **caractérisée en ce que**
le profilé (23) est pourvu dans sa partie en forme d'arc (23') d'une courbure correspondant à l'ouverture de passage (14) et est monté dans le boîtier (11) de manière qu'il est situé, avec son côté interne au niveau de cette courbure, approximativement à fleur de ce perçage (16) du boîtier formant l'ouverture de passage (14).

4. Vanne guillotine selon l'une quelconque des revendications précédentes 1 à 3, **caractérisée en ce que** les joints allongés (21, 22, 51, 52, 56, 57) conjointement avec les ailes (23", 53", 58') du profilé (23, 53, 58) forment un espace creux (25) avec une section transversale rectangulaire (25'), qui correspond approximativement à la section transversale de la plaque coulissante, de sorte que la plaque coulissante (15) est guidée approximativement sans jeu dans l'espace creux, ou qu'une certaine pré-tension est générée entre celles-ci.

5. Vanne guillotine selon la revendication 4, **caractérisée en ce que** les joints allongés (21, 22) se trouvant dans la nervure allongée (17, 18) dans la partie de boîtier (12, 13) respective et/ou les ailes (23") du profilé (23) peuvent être pressés contre la plaque coulissante (15) par des moyens de déplacement (19, 19') actionnables depuis l'extérieur du boîtier (11).

6. Vanne guillotine selon l'une quelconque des revendications précédentes 1 à 5, **caractérisée en ce que** les joints allongés (21, 22) ou le profilé (23) conçu en forme de U sont pourvus chacun dans la section transversale à l'arrière, en forme de rectangle, de chaque côté d'un évidement (32, 33) et, du côté intérieur, d'une surface d'appui (31, 35) plane coopérant avec le côté externe de la plaque coulissante (15).

7. Vanne guillotine selon l'une quelconque des revendications précédentes 1 à 6, **caractérisée en ce que** le profilé (23) présente du côté intérieur une largeur qui correspond approximativement à l'épaisseur de la plaque coulissante (15).

8. Vanne guillotine selon la revendication 1 ou 2, **caractérisée en ce que**
le boîtier (41) est formé sensiblement d'une seule partie et que le dispositif d'étanchéité (50) ainsi que la plaque coulissante (45) peuvent être fixés ou déplacés dans une fente allongée (42) correspondante dans le boîtier.

9. Dispositif d'étanchéité pour une vanne guillotine selon l'une quelconque des revendications précédentes 1 à 8, qui est formée d'une seule pièce d'au moins un joint allongé (21, 22, 51, 52, 56, 57) transversal et d'un profilé (23, 53, 58) avec des ailes (23", 53", 58'), **caractérisé en ce que**
de chaque côté aux extrémités des ailes (23", 53", 58') du profilé (23, 53, 58), deux joints allongés (21, 22) disposés parallèlement à distance l'un de l'autre sont reliés chacun au niveau de la surface latérale du profilé (58) à celui-ci, ou **en ce que**, pour le dispositif d'étanchéité (55) avec de chaque côté un joint allongé (56, 57) transversal, les deux ailes (58') du profilé (58) au niveau de leurs côtés externes (58'), qui sont tournés à l'opposé l'un de l'autre, et au niveau de leurs surfaces latérales (58") sont formées en se rétrécissant ou en étant coniques.

10. Dispositif d'étanchéité selon la revendication 9, **caractérisée en ce que**
il est fabriqué en une matière synthétique, de préférence du polyuréthane.

11. Dispositif d'étanchéité selon la revendication 9 ou 10, **caractérisé en ce que**
dans le profilé (23, 53, 58) est incorporé au moins un élément de renforcement (24, 54, 59) intégré de préférence sur toute la longueur.

12. Dispositif d'étanchéité selon la revendication 11, **caractérisé en ce que**
cet élément de renforcement (24) est situé au niveau des ailes (23") dans le profilé (23) approximativement au centre, tandis qu'il est situé dans la partie en forme d'arc (23') dans la zone externe du profilé (23).

13. Dispositif d'étanchéité selon l'une quelconque des revendications précédentes 9 à 12, **caractérisé en ce que** dans les joints allongés (21, 22) et/ou dans les ailes (23") du profilé (23) sont intégrées respectivement des plaques de renforcement (26, 26') du côté externe.
